# EUROPÄISCHE PATENTSCHRIFT

(11) **EP 1 709 711 B1**
(45) Veröffentlichungstag und Bekanntmachung des Hinweises auf die Patenterteilung: **02.05.2007**
(21) Anmeldenummer: 05774838.6
(22) Anmeldetag: 21.07.2005
(51) Int. Cl.: H01R 13/646

(54) **VORRICHTUNG ZUM ANSCHLUSS EINES KOAXIALKABELS AN EIN GEHÄUSE**
DEVICE FOR CONNECTING A COAXIAL CABLE TO A HOUSING
DISPOSITIF DE CONNEXION D'UN CABLE COAXIAL A UN BOITIER

(30) Priorität: 08.09.2004 DE 102004043518
(43) Veröffentlichungstag der Anmeldung: 11.10.2006
(73) Patentinhaber: Kathrein-Werke KG, 83022 Rosenheim (DE)
(72) Erfinder: HEIBLER, Wolfgang, 83104 Ostermünchen (DE); BERGER, Stefan, 83101 Rohrdorf (DE)
(74) Vertreter: Flach, Dieter Rolf Paul
(86) Internationale Anmeldenummer: PCT/EP2005/007959
(87) Internationale Veröffentlichungsnummer: WO 2006/027047

(56) Entgegenhaltungen:
- DE-B3- 10 259 803
- DE-C1- 19 824 808
- US-B1- 6 231 374

## Beschreibung

Die Erfindung betrifft eine Vorrichtung zum Anschluss eines Koaxialkabels, insbesondere eines Antennenkoaxialkabels, an ein Gehäuse.

Aus dem Stand der Technik sind eine Vielzahl von Anschlussvorrichtungen zur Befestigung eines Koaxialkabels, insbesondere des Außenleiters eines Koaxialkabels, an ein metallisches Gehäuse bekannt. Beispielsweise zeigt die Druckschrift DE 102 59 803 B3, die als nächstliegender Stand der Technik angesehen wird, eine elektrische Anschlussverbindung, bei der ein gestuftes Steckelement mit einer Rändelung in eine Aufnahmeöffnung in einem Gehäuse eingepresst wird.

Aus der Druckschrift DE 92 16 192 U1 ist ein Koaxialverbinder bekannt, bei dem ein an einem Koaxialleiter befestigter Stecker mit einer Schirmplatte verbunden wird. Hierzu wird eine Kontakthülse mit Federfingern auf dem Stecker positioniert und über eine Schirmhülse in die Schirmplatte eingeklemmt.

Die Druckschrift DE 198 24 808 C1 zeigt eine Halterung für ein Koaxialkabel, bei der ein Koaxialaußenleiter mit einem Anschlusselement in der Form einer Klemmhülse verbunden ist, wobei die Klemmhülse Vorsprünge aufweist, welche wiederum eine Aufnahme in einer Wandung kontaktieren.

Bei den Anschlussvorrichtungen gemäß dem Stand der Technik erweist es sich als nachteilhaft, dass zur Kontaktierung des Außenleiters das Koaxialkabel im wesentlichen in Axialrichtung eingeschoben werden muss, so dass Beschädigungen des Innenleiters beim Einführen in die Anschlussvorrichtung auftreten können.

Aus dem Stand der Technik ist es ferner bekannt, dass der Außenleiter eines Koaxialkabels an ein Verbindungselement angelötet wird, wobei dieses Verbindungselement wiederum direkt an ein Gehäuse angeschraubt wird. Dabei ist es problematisch, dass durch den einseitigen Stromfluss vom Außenleiter über die Verschraubungsstelle das koaxiale Prinzip aufgegeben wird. Ferner kann durch Setzvorgänge in der Verschraubung der elektrische Kontakt undefiniert werden.

Aufgabe der Erfindung ist es deshalb, eine Anschlussvorrichtung eines Koaxialkabels an einem Gehäuse zu schaffen, welche einen sicheren und einfachen Kontakt des Koaxialaußenleiters zum Gehäuse ermöglicht.

Diese Aufgabe wird durch die unabhängigen Patentansprüche gelöst. Weiterbildungen der Erfindung sind in den abhängigen Ansprüchen definiert.

Die erfindungsgemäße Vorrichtung umfasst ein Anschlusselement mit einer Axialachse, wobei in das Anschlusselement ein Koaxialkabel eingesetzt und leitend mit dem Außenleiter des Koaxialkabels verbunden werden kann. Dabei entspricht die Axialachse des Anschlusselementes im Wesentlichen der Axialachse des eingesetzten Koaxialkabels bzw. ist zu dieser parallel. Alternativ bildet das Anschlusselement einen Teil des Außenleiters des Koaxialkabels. Es ist ferner ein leitend mit dem Gehäuse verbindbares bzw. integral mit dem Gehäuse ausgebildetes Kupplungselement vorgesehen, welches eine Aufnahme aufweist, in welche das Anschlusselement eingesetzt werden kann. In der erfindungsgemäßen Vorrichtung weist die Aufnahme eine Einführöffnung auf, in die das Anschlusselement in eine Richtung eingefügt werden kann, welche im Wesentlichen senkrecht auf der Axialachse des Anschlusselementes steht. Ferner ist das Anschlusselement und die Aufnahme des Kupplungselementes derart geformt, das ein in die Aufnahme eingesetztes Anschlusselement eine oder mehrere vorbestimmte Kontaktstellen in der Aufnahme zur Herstellung eines leitenden Kontaktes berührt. Das Kupplungselement umfasst darüber hinaus eine Klemmeinrichtung, mit der das Anschlusselement lösbar in einer Klemmposition in der Aufnahme festgeklemmt werden kann, wobei in der Klemmposition die Klemmeinrichtung an der Einführöffnung Druck auf das Anschlusselement ausübt und dadurch das Anschlusselement an die eine oder mehreren Kontaktstellen drückt.

Die erfindungsgemäße Vorrichtung weist eine Reihe von Vorteilen auf. Durch die definierten Kontaktstellen wird ein eindeutig definierter Stromfluss des Außenleiters zum Gehäuse festgelegt. Ferner ist die Montage des Anschlusselementes und des damit verbundenen Koaxialkabels leicht möglich, da das Koaxialkabel in einer Richtung senkrecht zur Axialachse des Kabels eingeführt werden kann. Insbesondere werden hierdurch Beschädigungen des Innenleiters vermieden. Darüber hinaus wird das Anschlusselement mit Hilfe der Klemmeinrichtung selbsttätig an die Kontaktstellen des Kupplungselementes gedrückt, wodurch ein genauer und definierter leitender Kontakt zum Gehäuse gewährleistet wird.

In einer bevorzugten Ausführungsform sind mehrere, insbesondere vier Kontaktstellen vorgesehen, wobei ein Teil der Kontaktstellen gegenüber dem anderen Teil der Kontaktstellen in Axialrichtung des Anschlusselementes versetzt ist. Insbesondere liegt hierbei der eine Teil der Kontaktstellen an der Innenseite und der andere Teil der Kontaktstellen an der Außenseite des Gehäuses an. Hierdurch wird erreicht, dass der Außenleiterstrom, der auf der Außenseite des Außenleiters fließt, über die Kontaktstellen an der Außenseite des Gehäuses abfließt, wohingegen der Außenleiterstrom, der auf der Innenseite des Außenleiters fließt, über die Kontaktstellen an der Innenseite des Gehäuses abfließt.

In einer weiteren Variante der Erfindung sind die Kontaktstellen symmetrisch um eine Symmetrieachse angeordnet, welche der Richtung entspricht, in die das Anschlusselement in die Einführöffnung des Kupplungselementes eingesetzt wird. Insbesondere sind die Kontaktstellen gesehen in Axialrichtung des Anschlusselementes um einen Winkel zueinander versetzt, der zwischen 90° bis 120° liegt. Die Kontaktstellen können ferner ein oder mehrere Kontaktstellenpaare bilden, wobei jedes Kontaktstellenpaar zwei in Axialrichtung des Anschlusselementes miteinander ausgerichtete Kontaktstellen umfasst.

In einer bevorzugten Ausführungsform ist das Anschlusselement eine Anschlusshülse mit einer umlaufenden Profilnut, welche mit einem oder mehreren Flächenelementen in der Aufnahme zusammenwirkt, so dass die eine oder die mehreren Kontaktstellen Berührungsstellen zwischen den Flächenelementen und der Profilnut sind. Insbesondere ist die Profilnut keilförmig ausgestaltet, wobei die konischen Flanken der Profilnut an entsprechend angeordneten Zylinderflächen in der Aufnahme aufliegen. Hierdurch wird auf einfache Weise die axiale Befestigungsposition des Anschlusselementes in der Aufnahme durch Formschluß festgelegt. Die konischen Flanken der Profilnut sind hierbei vorzugsweise in einem Winkel von +30° bzw. -30° gegenüber der Axialachse der Hülse geneigt. In einer besonders bevorzugten Variante sind die Zylinderflächen Flächenabschnitte eines oder mehrerer Zylinder, welche gegenüber der Achse, in deren Richtung das Anschlusselement in die Einführöffnung eingesetzt wird, geneigt sind, insbesondere in einem.Winkel von +45° bzw. -45°, wobei die Achse des oder der Zylinder in einer Ebene senkrecht zur Axialachse der Hülse liegt. Darüber hinaus kann die Aufnahme zwei gegenüberliegende Vorsprünge aufweisen, welche in die keilförmige Profilnut des Anschlusselementes eingreifen.

In einer alternativen Ausgestaltung der erfindungsgemäßen Vorrichtung ist das Anschlusselement eine Anschlusshülse mit einem umlaufenden Profilring, welcher mit einer oder mehreren Einkerbungen in der Aufnahme derart zusammenwirkt, dass der oder die Kontaktstellen Berührungsstellen der Einkerbungen an dem Profilring sind. Auch bei dieser Ausgestaltung wird auf einfache Weise eine.axiale Fixierung der Anschlusshülse in der Aufnahme erreicht.

In einer weiteren Ausgestaltung ist die Aufnahme eine zwischen zwei Flanschabschnitten gebildete Aussparung, wobei an den Flanschabschnitten ein sich über die Aussparung erstreckender Klemmbalken lösbar befestigt ist, welcher zumindest mittelbar auf das Anschlusselement drückt. Insbesondere drückt der Klemmbalken an einer oder mehreren, vorzugsweise zwei Kontaktstellen auf das Anschlusselement. Der Klemmbalken ist dabei vorzugsweise wenigstens an einem der Flanschabschnitte angeschraubt. Durch die Verwendung eines Klemmbalkens wird eine einfache Montage des Anschlusselementes, insbesondere unter Verwendung eines herkömmlichen Schraubenziehers, in der Aufnahme gewährleistet.

In einer weiteren Variante kann der Klemmbalken derart in dem Kupplungselement vormontiert werden, dass er an einem Ende um eine Axialachse eines Flanschabschnitts bis in eine Anschlagsposition gedreht werden kann, wobei der Klemmbalken zur Bewirkung der Klemmung in der Anschlagsposition fixiert werden kann. Vorzugsweise kontaktiert in der. Anschlagsposition ein am entgegengesetzten Ende des Klemmbalkens angeordneter Eingriffsabschnitt den anderen Flanschabschnitt, jedoch ist es auch möglich, dass der Klemmbalken auf andere Weise fixiert wird, ohne dass das entgegengesetzte Ende des Klemmbalkens den anderen Flanschabschnitt berührt. Durch die Vormontage des Klemmbalkens wird auf einfache Weise eine Anordnung des Klemmbalkens in einer Position gewährleistet, in welcher der Balken zur Klemmung fixiert wird. Insbesondere weist der Klemmbalken an einem Ende ein Loch mit geschlossenem Rand auf, in dem ein erster Schraubbolzen zum Verschrauben mit einem Flanschabschnitt eingesetzt ist, wobei der Eingriffsabschnitt ein an dem entgegengesetzten Ende des Klemmbalkens angeordnetes, zum Rand des Klemmbalkens geöffnetes Loch ist, so dass durch eine Schwenkbewegung des Klemmbalkens das geöffnete Loch auf einen zweiten Schraubbolzen zum Verschrauben mit dem anderen Flanschabschnitt positioniert werden kann, wobei die Klemmung durch Festziehen der Schraubbolzen bewirkt wird.

Vorzugsweise weist der Klemmbalken einen Vorsprung auf, mit dem er durch die Finger eines Benutzer gedreht werden kann. In einer bevorzugten Variante drückt der Klemmbalken zur Bewirkung der Klemmung direkt auf das Anschlusselement. Es ist jedoch auch möglich, dass der Klemmbalken zur Bewirkung der Klemmung auf eine oder mehrere Klemmbacken in der Aufnahme drückt, wobei die Klemmbacken das Anschlusselement an einer oder mehreren Kontaktstellen kontaktieren.

Der Klemmbalken ist vorzugsweise zur Bewirkung der Klemmung elastisch verformbar, wobei durch die Verformbarkeit ein hoher Toleranzausgleich geschaffen wird und alle Veränderungen in den Kontaktbedingungen, insbesondere durch Setzen und Wärmeausdehnung verursachte Veränderungen, ausgeglichen werden. Hierdurch werden immer hohe Kontaktkräfte sichergestellt.

Vorzugsweise besteht der Klemmbalken aus einem nicht leitenden Material, insbesondere aus Glasfaserkunststoff. Es ist jedoch auch denkbar, dass der Klemmbalken aus Metall, vorzugsweise aus Federbronze besteht. In diesem Falle werden weitere elektrische Kontaktstellen neben den bereits vorhandenen Kontaktstellen in der Aufnahme geschaffen. Der Klemmbalken kann ferner gegenüber den Flanschabschnitten und/oder dem Anschlusselement isoliert sein.

Das Anschlusselement kann ein einfach zu fertigendes metallisches Drehteil sein. Das Kupplungselement ist insbesondere integral mit dem Gehäuse in der Form eines Gussteils ausgebildet. Ferner ist der Außenleiter des Koaxialkabels vorzugsweise in das Anschlusselement eingelötet.

Die Erfindung betrifft neben der gerade beschriebenen Anschlussvorrichtung auch ein Gehäuse, insbesondere ein Gehäuse eines Phasenschiebers einer Antennenanordnung, welche die erfindungsgemäße Anschlussvorrichtung umfasst. Hierbei sind die Kontaktstellen der Anschlussvorrichtung vorzugsweise.derart angeordnet, dass ein Teil der Kontaktstellen benachbart zur Innenseite des Gehäuses und ein anderer Teil der Kontaktstellen benachbart zur Außenseite des Gehäuses liegt.

Ausführungsbeispiele der Erfindung werden nachfolgend detailliert anhand der beigefügten Figuren beschrieben.

Es zeigen:
- Figur 1:: eine perspektivische Ansicht einer ersten Ausführungsform der erfindungsgemäßen Anschlussvorrichtung mit eingesetztem Koaxialkabel;
- Figur 2:: eine Draufsicht auf die Vorrichtung der Figur 1 ohne Klemmeinrichtung;
- Figur 3:: eine perspektivische Ansicht der Aufnahme der Anschlussvorrichtung aus Figur 1 ohne eingesetzte Hülse;
- Figur 4:: eine perspektivische Ansicht der Aufnahme der Anschlussvorrichtung aus Figur 1 mit eingesetzter Hülse;
- Figuren 5A und 5B:: zwei perspektivische Ansichten der in der Vorrichtung der Figur 1 verwendeten Anschlusshülse;
- Figur 6:: eine perspektivische Ansicht einer zweiten Ausführungsform der erfindungsgemäßen Anschlussvorrichtung;
- Figur 7:: eine Draufsicht von vorne auf die Vorrichtung der Figur 6;
- Figur 8:: eine Schnittansicht durch die Vorrichtung der Figur 6 mit eingesetztem Koaxialkabel entlang einer Ebene, welche senkecht auf der Axialachse des Koaxialkabels steht und mittig durch die Aufnahme verläuft;
- Figur 9:: eine Schnittansicht senkrecht zum Schnitt der Figur 8 entlang des Innenleiters des eingesetzten Koaxialkabels;
- Figur 10:: eine perspektivische Ansicht einer Aufnahme in einer dritten Ausführungsform der erfindungsgemäßen Vorrichtung ohne eingesetzte Hülse;
- Figur 11:: eine perspektivische Ansicht der Aufnahme gemäß Figur 10 mit eingesetzter Hülse;
- Figuren 12A und 12B:: perspektivische Ansichten der in Figur 11 gezeigten Hülse;
- Figur 13:: eine perspektivische Ansicht der dritten Ausführungsform der erfindungsgemäßen Anschlussvorrichtung mit festgeklemmter Hülse;
- Figur 14:: eine Draufsicht von vorne auf die Vorrichtung der Figur 13; und
- Figur 15:: eine Draufsicht von vorne auf eine vierte Ausführungsform der erfindungsgemäßen Anschlussvorrichtung.

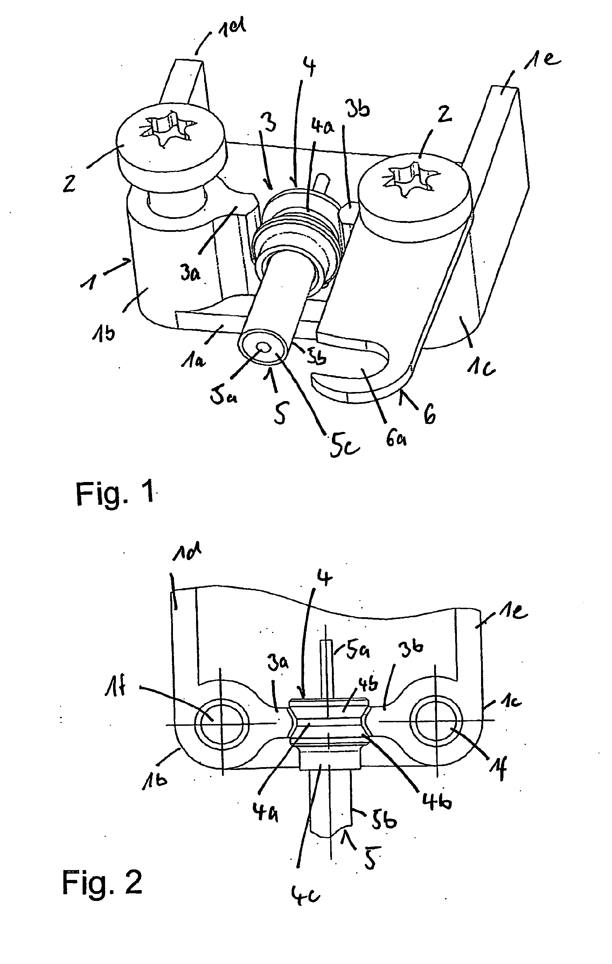

Die in Figur 1 gezeigte erste Ausführungsform der erfindungsgemäßen koaxialen Anschlussvorrichtung umfasst ein Kupplungselement 1, welches vorzugsweise Teil eines metallischen Gehäuses ist und integral als Gussform mit dem Gehäuse ausgebildet ist. Das Kupplungselement besteht beispielsweise aus Aluminium oder Zink, und das Gehäuse ist z.-B. ein Gehäuse eines in Hochfrequenz-Antennenanordnungen verwendeten Phasenschiebers, mit dem in Mobilfunkantennen eine Phasenverschiebung der Strahlung der einzelnen Antennenelemente bewirkt wird. Das Kupplungselement umfasst einen Sockelbereich 1a, aus dem sich zwei Flanschabschnitte 1b und 1c nach oben erstrecken. An die Flanschabschnitte schließen sich jeweils Wandungen 1d und 1e an, welche Teile des Gehäuses bilden und sich zu weiteren Flanschabschnitten erstrecken. Die Flanschabschnitte 1b und 1c umfassen jeweils eine Bohrung, in welche entsprechende Schraubbolzen 2 eingeschraubt sind. Zwischen den Flanschen 1b und 1c ist eine Aufnahme 3 gebildet, welche links und rechts durch zwei, sich jeweils an einem Flanschabschnitt anschließende Vorsprünge 3a und 3b begrenzt wird. In die Aufnahme ist eine Anschlusshülse 4 von oben über die zwischen den Flanschen gebildete Einführöffnung eingesetzt. Die Anschlusshülse besteht aus leitfähigem Material, beispielsweise aus verzinntem Messing oder Neusilber, und sie weist eine Profilierung in der Form einer Nut 4a auf, wobei sich die Vorsprünge 3a und 3b in die Nut erstrecken, wodurch das Entfernen der Hülse aus der Aufnahme 3 in axialer Richtung verhindert wird. In die Hülse ist ein Koaxialkabel 5 mit Innenleiter 5a, Außenleiter 5b und dazwischen liegendem Dielektrikum 5c eingesetzt. Der Außenleiter wird hierbei vorzugsweise in die Hülse 4 eingelötet. Die Aufnahme 3 sowie die Hülse 4 sind derart geformt, dass definierte Kontaktstellen zwischen Hülse und Aufnahme festgelegt sind, so dass ein definierter Stromfluss vom Außenleiter 5b zum Gehäuse existiert, wie im Folgenden noch näher beschrieben wird.

An der Oberseite der Flanschabschnitte 1b und 1c befindet sich eine Klemmeinrichtung in der Form eines Klemmbalkens 6, der in Figur 1 in geöffneter, nicht klemmender Position gezeigt ist. Der Klemmbalken umfasst an einem Ende ein (nicht aus Figur 1 ersichtliches) Loch, in das eine Schraube 2 eingesetzt. Die Schraube ist soweit in den Flansch 1c eingeschraubt, dass der Klemmbalken zwischen Unterseite der Schraube 2 und Oberseite des Flansches 1c fixiert wird. Die Schraube ist in Figur 1 jedoch nicht festgezogen, so dass noch eine Verdrehung des Klemmbalkens 6 um die Achse der Schraube 2 ermöglicht wird. Der Klemmbalken 6 weist an seinem vorderen Ende eine Aussparung 6a auf, welche zu einem Rand des Klemmbalkens hin geöffnet ist. Durch die Aussparung 6a wird ein Eingriffsabschnitt gebildet, der durch Verschwenken des Klemmbalkens 6 hin zum Flanschabschnitt 1b in das Außengewinde einer weiteren, in die Bohrung des Flanschabschnittes 1b eingesetzten Schraube 2 eingreift. In dieser Eingriffsposition erstreckt sich der Klemmbalken 6 über die Aufnahme 3. Werden anschließend die beiden Schrauben 2 festgezogen, drückt der Klemmbalken an zwei definierte Auflagepunkte der Hülse 4. Hierdurch wird die Hülse fest an die Kontaktstellen in der Aufnahme gedrückt, wodurch ein guter leitender Kontakt der Hülse zu den Kontaktstellen in der Aufnahme hergestellt wird.

Der Klemmbalken kann aus leitendem Material, z. B. aus Federbronze, bestehen, so dass zwei weitere elektrische Kontaktstellen der Hülse zum Klemmbalken und damit zum Gehäuse ermöglicht werden. Alternativ kann der Klemmbalken auch aus nicht leitendem oder nicht metallischem Material, wie z.B. Glasfaserkunststoff, bestehen, so dass keine weiteren elektrischen Kontaktpunkte zwischen Hülse und Klemmbalken bereitgestellt werden. Es ist auch möglich, dass der Klemmbalken zwar aus metallischem Material besteht, jedoch gegenüber der Hülse und/oder den Flanschabschnitten isoliert ist. Durch die Anschlussvorrichtung der Figur 1 kann das Koaxialkabel 5 einfach durch eine Fügebewegung senkrecht zur Axialrichtung des Kabels in das Kupplungselement 1 eingefügt werden, wodurch Beschädigungen des Innenleiters 5a vermieden werden. Ferner kann auf einfache Weise ein lösbarer elektrischer Kontakt zwischen dem Außenleiter 5b des Kabels 5 und dem Kupplungselement 1 gewährleistet werden.

Figur 2 zeigt eine Draufsicht auf die Vorrichtung der Figur 1, wobei die oberen Schrauben 2 und der Klemmbalken 6 weggelassen wurden. Man erkennt insbesondere, dass die Nut 4a der Hülse 4 zwei gegenüberliegende, umlaufende konische Flanken 4b aufweist, in welche die vorderen abgerundeten Ränder der Vorsprünge 3a und 3b eingreifen. Die Ränder kontaktieren dabei nie die Flanken, da durch die definierten (nicht aus Figur 2 ersichtlichen) Kontaktstellen zwischen Hülse und Aufnahme eine Selbstzentrierung der Hülse in der Aufnahme erreicht wird, so dass es ausschließlich zu einer Kontaktierung der Hülse an den definierten Kontaktstellen kommt. Die Vorsprünge dienen somit nur zur groben Fixierung, damit die Hülse leicht montiert werden kann und nicht axial entweicht, bevor die Schrauben 2 zur Fixierung des Klemmbalkens angezogen werden. Man erkennt ferner, dass die Hülse 4 einen vorderen zylindrischen Abschnitt 4c aufweist, in dem der Außenleiter 5b des Koaxialkabels 5 eingesetzt ist. Darüber hinaus sind die Öffnungen 1f in den Flanschabschnitten 1b bzw. 1c ersichtlich.

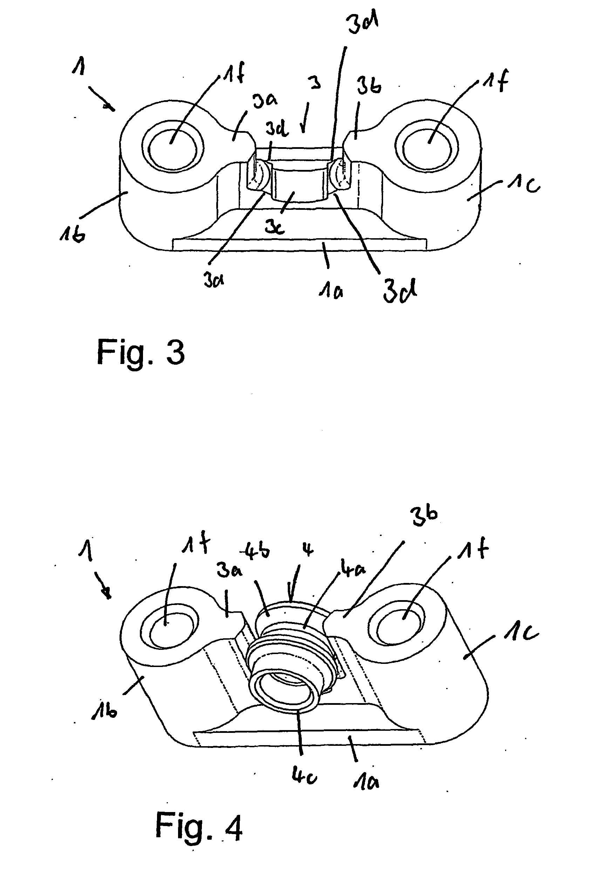

Figuren 3 und 4 zeigen perspektivische Ansichten des die Aufnahme bildenden Bereiches des Kupplungselementes 1. Figur 3 zeigt hierbei eine Ansicht ohne eingesetzte Anschlusshülse 4, wohingegen in Figur 4 die Anschlusshülse in die Aufnahme 3 eingesetzt ist. Aus Figur 3 wird die detaillierte Form der Aufnahme ersichtlich. Die Aufnahme umfasst in einem unteren Bereich eine kreisförmige Aussparung 3c, an die sich vier schräg liegende Zylinderflächen 3d anschließen. Es sind jeweils zwei Zylinderflächen auf der linken und rechten Seite der Aussparung 3c vorgesehen. Die Zylinderflächen 3d auf der rechten Seite liegen hierbei auf einem Zylinder mit dem Durchmesser 4 mm, wobei die Zylinderachse gegenüber einer vertikalen Achse, welche senkrecht auf dem Sockel 1a steht, um +45° geneigt ist und in einer mittig durch die beiden Flanschabschnitte 1b und 1c verlaufenden Ebene liegt. Analog liegen die linken Zylinderflächen 3d auf einem Zylinder, der gegenüber der vertikalen Achse um -45° geneigt ist. An die Zylinderflächen 3d liegen die konischen Flächen 4b der Nut 4a an, wobei die konischen Flächen gegenüber einer auf der Axialachse der Hülse 4 senkrecht stehenden Achse um +30° bzw. -30° geneigt sind. Durch das Zusammenwirken der konischen Flächen 4b mit den Zylinderflächen 3d werden auf diese Weise vier punktförmige Kontaktstellen zwischen der Hülse 4 und dem Kupplungselement 1 gebildet. Die beiden vorderen Zylinderflächen 3d liegen hierbei auf der Außenseite des (nicht gezeigten) Gehäuses, wohingegen die hinteren beiden Zylinderflächen 3d auf der Innenseite des Gehäuses liegen. Somit fließt der Außenleiterstrom, der auf der Innenseite des Außenleiters fließt, über die Zylinderflächen der Gehäuseinnenseite ab, wohingegen der Außenleiterstrom auf der Außenseite des Außenleiters über die Zylinderflächen auf der Gehäuseaußenseite abfließt.

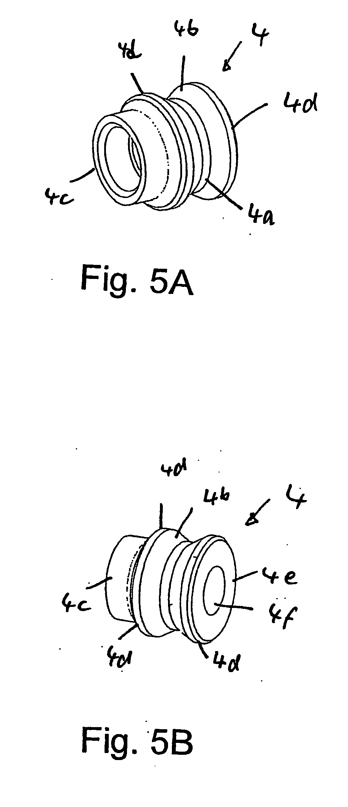

Figuren 5A und 5B zeigen nochmals perspektivische Ansichten der Anschlusshülse 4 gemäß der soeben beschriebenen ersten Ausführungsform der Erfindung. Man erkennt insbesondere, dass sich an die konischen Abschnitte 4b der Nut 4a jeweils schmale zylindrische Abschnitte 4d anschließen. Ist die Hülse in der Anschlussvorrichtung mittels des zuvor beschriebenen Klemmbalkens 6 befestigt, drückt der Klemmbalken jeweils an einen Berührpunkt auf den schmalen Abschnitten 4d. Aus Figur 5B ist ferner ersichtlich, dass das dem zylindrischen Abschnitt 4c gegenüberliegende Ende 4e der Hülse eine planare Fläche mit einer Öffnung 4f bildet, wobei sich bei eingesetztem Koaxialkabel 5 das Dielektrikum 5c in der Öffnung 4f befindet. Es ist jedoch auch möglich, dass das Dielektrikum nicht bis zur Öffnung 4f reicht, sondern bereits im Bereich der Nut 4a endet.

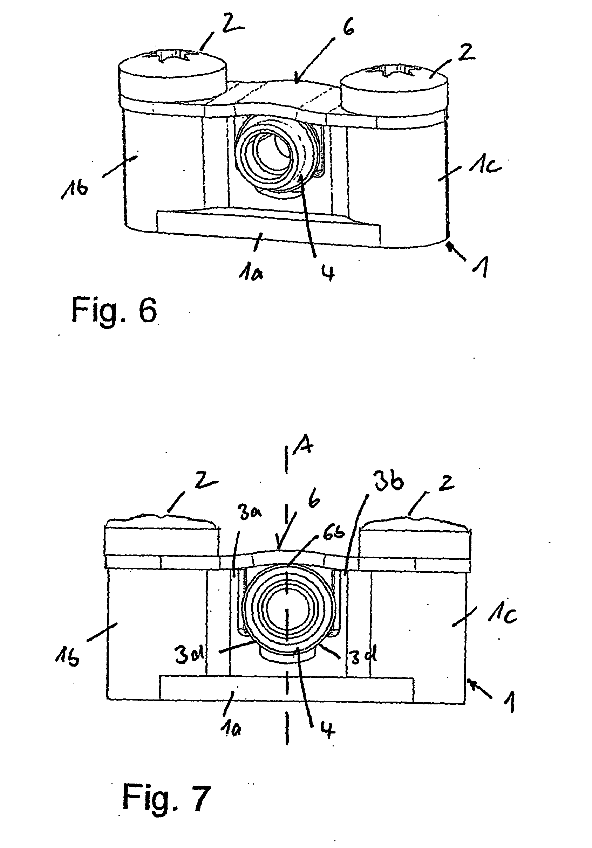

Figur 6 zeigt eine perspektivische Ansicht einer zweiten Ausführungsform der erfindungsgemäßen Anschlussvorrichtung mit darin eingesetzter und mit Hilfe des Klemmbalkens 6 festgeklemmter Hülse 4. Die Ausführungsform der Figur 6 entspricht im Wesentlichen der ersten Ausführungsform, mit dem Unterschied, dass die Aussparung 6a durch ein (nicht ersichtliches) Loch mit geschlossenem Rand ersetzt wurde, so dass der Klemmbalken nun zwei Löcher mit durchgehender Umrandung aufweist, in die jeweils Schrauben 2 eingesetzt sind. Die Schrauben sind in Figur 6 festgezogen, so dass durch den Klemmbalken eine Klemmung bewirkt wird. Insbesondere ist ersichtlich, dass der Klemmbalken im Bereich seiner Kontaktstellen an der Anschlusshülse 4 gewölbt ist. Durch diese elastische Verformung werden alle Veränderungen in den Kontaktbedingungen ausgeglichen, beispielsweise durch Wärmeausdehnung entstehende Veränderungen. Es werden somit hohe Kontaktkräfte sichergestellt. Die plastische Verformung des Balkens schafft ferner einen hohen Ausgleich von Fertigungstoleranzen.

Figur 7 zeigt eine Draufsicht von vorne auf die Vorrichtung der Figur 6. Es sind insgesamt sechs Kontaktstellen 3d und 6b auf der Hülse vorgesehen, wobei aus Figur 7 die vorderen zwei Kontaktstellen 3d hin zur Aufnahme 3 sowie die vordere obere Kontaktstelle 6b hin zum Klemmbalken 6 ersichtlich sind. Die Kontaktstellen sind symmetrisch um die vertikale, durch die Hülsenmitte gehende Achse A angeordnet.

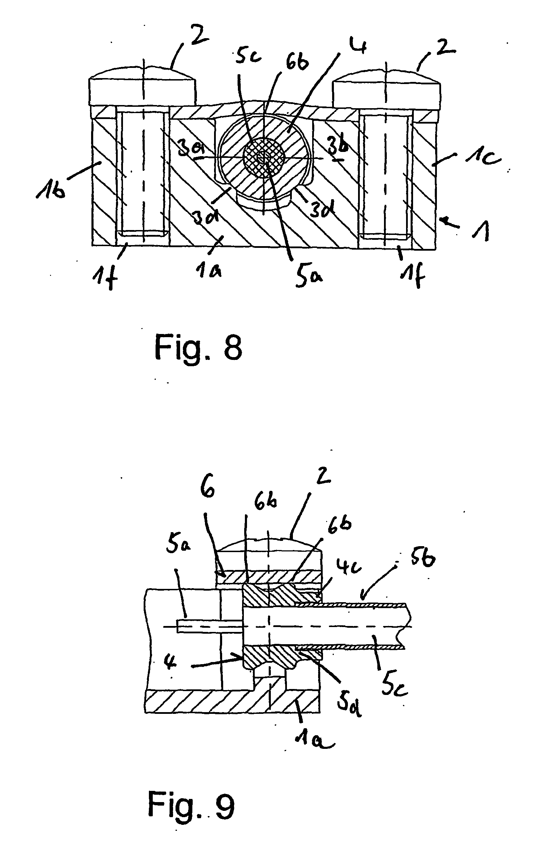

Figur 8 zeigt einen Schnitt durch die Vorrichtung der Figur 7 mit eingesetztem Koaxialkabel 5 entlang einer Ebene, die senkrecht zur Axialrichtung der Hülse durch entsprechende Kontaktstellen 6b und 3d verläuft. Man erkennt, dass die Hülse in diesem Bereich im Vergleich zum Innenleiter 5a und Dielektrikum 5c relativ dick ist. Ferner ist ersichtlich, dass sich in diesem Bereich kein koaxialer Außenleiter mehr befindet, d.h. dass der Außenleiter in diesem Bereich abisoliert ist. Dies ergibt sich auch nochmals aus der Figur 9, welche ein Längsschnitt der Figur 8 entlang der Axialrichtung der Hülse und des Koaxialkabels ist. Man erkennt, dass sich das vordere Ende 5d des Koaxialaußenleiters 5c nicht durch die gesamte Hülse 4 erstreckt, sondern bereits kurz nach dem zylindrischen Abschnitt 4c der Hülse aufhört. In dem Bereich, in dem der Koaxialaußenleiter 5b in dem Abschnitt 4c aufgenommen ist, erfolgt die Anlötung des Außenleiters an die Hülse. Die Anlötung kann vor dem Einsetzen der Hülse in das Kupplungselement erfolgen. Es ist aber auch möglich, dass die Hülse zunächst in das Kupplungselement 1 eingesetzt wird und erst anschließend der Außenleiter festgelötet wird. Aus Figur 9 ist ferner ersichtlich, dass der Klemmbalken 6 an den zwei oberen, axial versetzten Kontaktstellen 6b auf die Hülse 4 drückt.

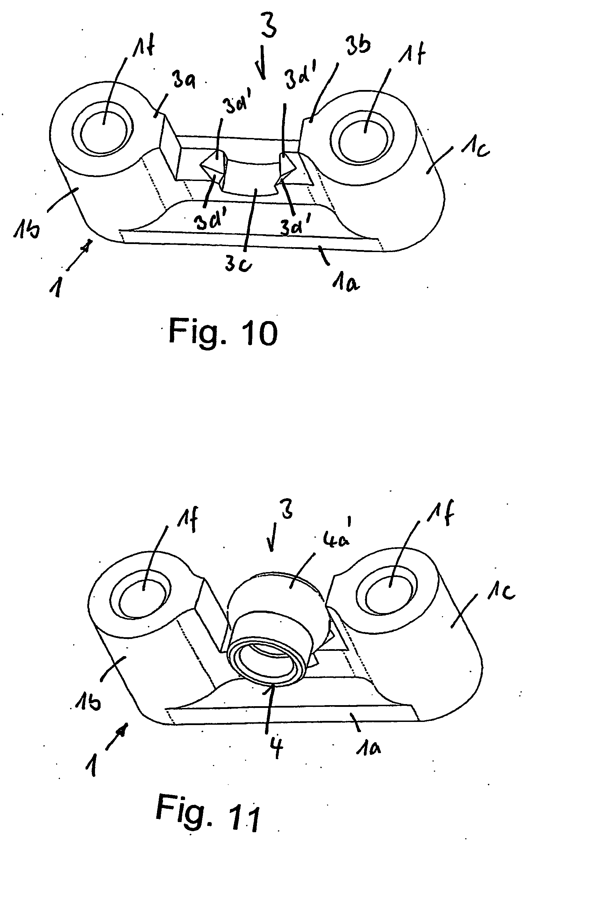

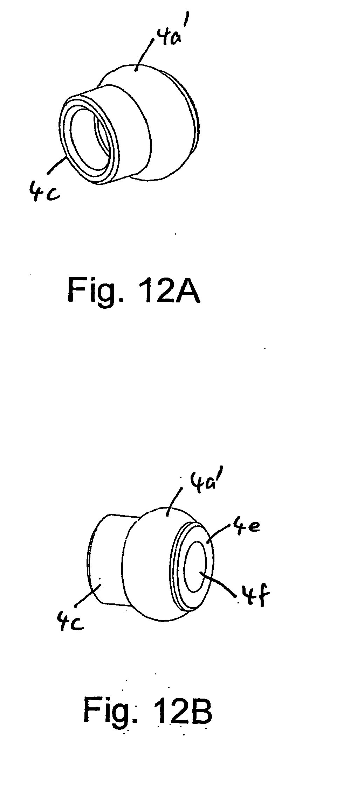

Figuren 10 und 11 zeigen zwei perspektivische Ansichten einer weiteren Ausführungsform einer in der erfindungsgemäßen Vorrichtung verwendeten Aufnahme 3. Figur 10 zeigt eine Ansicht der Aufnahme des Kupplungselementes ohne eingesetzte Hülse 4, wohingegen in Figur 11 die Anschlusshülse in der Aufnahme des Kupplungselementes positioniert ist. Die Ausführungsform gemäß Figuren 10 und 11 unterscheidet sich von den vorhergehenden Ausführungsformen darin, dass die Anschlusshülse 4 statt einer Profilnut 4a einen umlaufenden Profilring 4a' aufweist, der in entsprechende Einkerbungen eingesetzt wird, wobei die schrägen Flächen der Einkerbungen vier Kontaktstellen 3d' zwischen Anschlusshülse 4 und Kupplungselement 1 bilden. Analog zu den vorangegangenen Ausführungsformen werden zwei Kontaktstellenpaare gebildet, wobei die Kontaktstellen jedes Paares axial zueinander versetzt sind. Insbesondere liegen die vorderen Kontaktstellen an der Außenseite eines (nicht gezeigten) Gehäuses und die hinteren Kontaktstellen befinden sich an der Innenseite eines (nicht gezeigten) Gehäuses. Ein weiterer Unterschied zu den vorhergehenden Ausführungsformen besteht darin, dass die Vorsprünge 3a und 3b nicht abgerundet sind, sondern jeweils einen planaren, vertikalen Abschluss aufweisen.

Figuren 12A und 12B zeigen zwei perspektivische Ansichten der Anschlusshülse 4 aus Figur 11. Man erkennt, dass der Profilring 4a' im Wesentlichen einen bauchigen Bereich bildet, der sich an ein zylindrisches Ende 4c der Hülse 4 anschließt. Der bauchige Bereich endet an der gegenüberliegenden Seite des zylindrischen Endes 4c mit einer planaren Fläche 4e, in der sich die Öffnung 4f befindet, in die das Dielektrikum 5c des Koaxialkabels 5 positioniert wird. Es ist auch bei dieser Ausführungsform möglich, dass das Dielektrikum nicht bis zur Öffnung 4f reicht, sondern bereits im Bereich der Nut 4a endet.

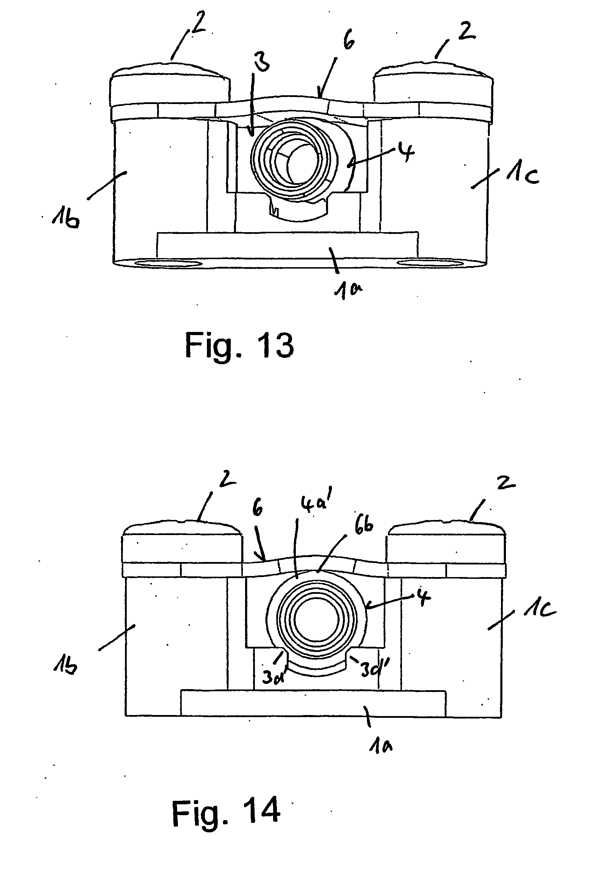

Figur 13 zeigt eine perspektivische Ansicht einer Anschlussvorrichtung mit dem Kupplungselement aus den Figuren 10 und 11, wobei in dem Kupplungselement die Hülse 4 mit dem Profilring 4a' über einen Klemmbalken 6 in der Aufnahme 3 eingeklemmt ist. Der Klemmbalken entspricht hierbei dem in den Ausführungsformen der Figuren 6 bis 9 verwendeten Klemmbalken. Es ist ersichtlich, dass der Klemmbalken zur Bewirkung der Klemmung in seiner Mitte elastisch verformt ist. Der Klemmbalken drückt hierbei an einer einzigen Kontaktstelle 6b auf den Profilring 4a' der Anschlusshülse 4. Dies erkennt man insbesondere auch aus Figur 14, welche eine Draufsicht von vorne auf die Vorrichtung der Figur 13 zeigt. Es ist ersichtlich, dass der Profilring 4a' an seinem obersten Punkt 6b an dem verformten Klemmbalken 6 anliegt und dass der Profilring 4a' ferner an den Kontaktstellen 3d' in den Einkerbungen aufliegt. Es werden.somit vier Kontaktstellen des Profilrings zur Aufnahme 3 und eine Kontaktstelle des Profilrings zum Klemmbalken 6 geschaffen.

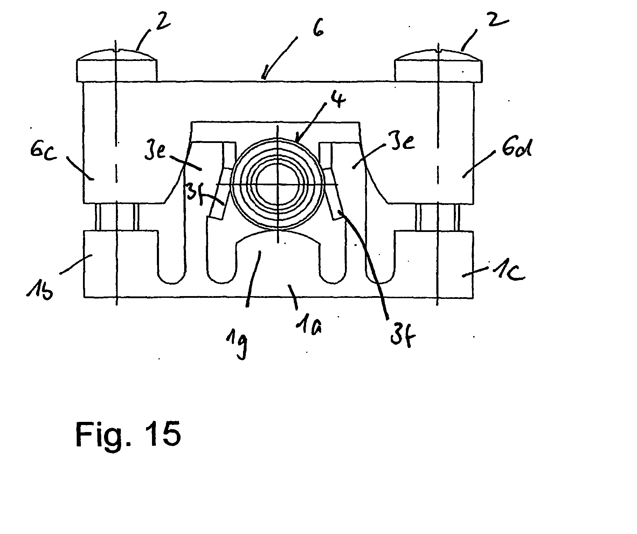

Figur 15 zeigt eine Draufsicht von vorne auf eine weitere Ausführungsform der erfindungsgemäßen Anschlussvorrichtung. Analog zu den Ausführungsformen der Figuren 1 bis 9 wird eine Anschlusshülse 4 mit Profilnut 4a verwendet. Im Gegensatz zu jenen Ausführungsformen werden die Klemmkräfte jedoch durch zwei Klemmbacken 3e in der Aufnahme 3 erzeugt, wobei an der Innenseite der Backen angeordnete Keile 3f in die Nut eingreifen, wodurch wiederum definierte Kontaktstellen vorgegeben werden. Der Klemmbalken weist hierbei an der Unterseite zwei Flanschabschnitte 6c und 6d mit keilförmigen Innenflächen auf, die gegen die Backen 3e drücken, wenn die Schrauben 2 in den Flanschen 1b und 1c festgezogen werden. Der Sockel 1a umfasst ferner eine Erhebung 1g mit einer abgerundeten Oberfläche, auf der die schmalen zylindrischen Abschnitte 4d der Hülse 4 aufliegen und hierdurch einen weiteren Kontakt zum Gehäuse bilden. Die Ausführungsform der Figur 15 kann auch mit der Hülse aus der Ausführungsform der Figuren 10 bis 14 kombiniert werden. In diesem Fall weisen die Klemmbacken 3e antstatt der Keile 3f Einkerbungen auf, an denen der Profilring 4a' der Hülse 4 anliegt.

## Patentansprüche

1. Vorrichtung zum Anschluss eines Koaxialkabels (5), insbesondere eines Antennenkoaxialkabels, an einem Gehäuse, wobei die Vorrichtung folgende Merkmale aufweist:
- es ist ein hülsenförmiges Anschlusselement (4) mit einer Axialachse vorgesehen,
- das Anschlusselement (4) ist mit dem Außenleiter (5b) des Koaxialkabels (5) verbunden oder verbindbar, wozu das Koaxialkabel (5) in das hülsenförmige Aufnahmeelement (4) eintaucht oder darin einsetzbar oder damit verbindbar ist, oder das Anschlusselement (4) einen Teil des Außenleiters (5b) des Koaxialkabels (5) bildet,
- es ist ein leitend mit dem Gehäuse verbindbares oder am Gehäuse integral ausgebildetes Kupplungselement (1) vorgesehen,
- das Kupplungselement (1) weist eine Aufnahme (3) zum Einsetzen des Anschlusselementes (4) auf,
- die Aufnahme (3) des Kupplungselementes (1) weist eine Einführöffnung auf, in welche das Anschlusselement (4) in einer Richtung eingesetzt werden kann, welche im Wesentlichen senkrecht zur Axialachse des Anschlusselementes (4) verläuft,
- das Kupplungselement (1) umfasst eine Klemmeinrichtung (6), mit der das Anschlusselement (4) lösbar in einer Klemmposition in der Aufnahme (3) festgeklemmt werden kann, wobei in der Klemmposition die Klemmeinrichtung (6) an der Einführöffnung Druck auf das Anschlusselement (4) ausübt und **dadurch** das Anschlusselement (4) an die mehreren Kontaktstellen (3d, 3d') drückt,
- das Aufnahmeelement (4) und das Kupplungselement (1) sind mit ineinander greifenden Vorsprüngen und Vertiefungen versehen,
a) wobei das Aufnahmeelement (4) mit einer in Umfangsrichtung verlaufenden Profilnut (4a) versehen ist, wodurch in Axialrichtung versetzt liegende radial vorstehende Ringstege an dem Aufnahmeelement (4) gebildet sind, in welche an dem Kupplungselement (1) ausgebildete Vorsprünge in die Profilnut (4a) zwischen den Ringstegen eintauchen, oder
b) wobei das Kupplungselement (1) mit einer in Umfangsrichtung versehenen nutförmigen Einkerbung (3a, 3b) versehen ist, wodurch in Axialrichtung versetzt liegende radial vorstehende Vorsprünge an dem Kupplungselement (1) gebildet sind, wobei das Aufnahmeelement (4) einen in Umfangsrichtung verlaufenden Profilring oder Profilvorsprung aufweist, der in die nutförmige Einkerbung (3a, 3b) am Kupplungselement (1) eintaucht,
- die Profilnut (4a) bzw. die nutförmige Einkerbung (3a, 3b) weisen in Axialrichtung des Anschlusselementes (4) versetzt liegende Flanken (4b; 3d') auf, die gegensinnig divergierend ausgebildet sind, und
- die Kontaktstellen (3d; 3d') sind an dem Kontaktelement (1) so ausgebildet und/oder so angeordnet, dass sie die hülsenförmige Aufnahmeeinrichtung (4) an den divergierenden Flanken (4b) der Profilnut (4a) bzw. des Profilringes (4a') teils in Axialrichtung und teils in Umfangsrichtung der Anschlusshülse (4) versetzt liegend kontaktieren.

2. Vorrichtung nach Anspruch 1, **dadurch gekennzeichnet, dass** mehrere, insbesondere vier Kontaktstellen (3d, 3d') vorgesehen sind, wobei zumindest ein Paar von Kontaktstellen (3d, 3d') in Axialrichtung versetzt zueinander und in Umfangsrichtung bezogen auf die hülsenförmige Anschlusseinrichtung (4) in gleicher Position vorgesehen sind.

3. Vorrichtung nach Anspruch 2, **dadurch gekennzeichnet, dass** der eine Teil der Kontaktstellen (3d, 3d') an der Innenseite des Gehäuses und der andere Teil der Kontaktstellen (3d, 3d') an der Außenseite des Gehäuses liegt.

4. Vorrichtung nach einem der vorhergehenden Ansprüche, **dadurch gekennzeichnet, dass** die Kontaktstellen (3d, 3d') symmetrisch um eine Symmetrieachse angeordnet sind, welche der Richtung entspricht, in die das Anschlusselement (4) in die Aufnahme (3) eingesetzt wird.

5. Vorrichtung nach Anspruch 4, **dadurch gekennzeichnet, dass** die Kontaktstellen (3d, 3d') gesehen in Axialrichtung des Anschlusselementes (4) um einen Winkel zwischen 90° und 120° zueinander versetzt sind.

6. Vorrichtung nach einem der Ansprüche 1 bis 5, **dadurch gekennzeichnet, dass** im Falle eines hülsenförmige Aufnahmeelement (4) mit einer umlaufenden Profilnut (4a) die Kontaktstellen (3d) am Kontaktelement (1) eine Teilstruktur einer Zylinderoberfläche (3d) darstellen.

7. Vorrichtung nach Anspruch 6, **dadurch gekennzeichnet, dass** die konischen Flanken (4b) der Profilnut (4a) in einem Winkel von +30° und/oder -30° gegenüber der Axialachse der Hülse (4) geneigt sind.

8. Vorrichtung nach Anspruch 6 oder 7, **dadurch gekennzeichnet, dass** die Zylinderflächen (3d) Flächenabschnitte eines oder.mehrerer Zylinder darstellen, welche gegenüber der Achse, in deren Richtung das Anschlusselement (4) in die Einführöffnung der Aufnahme (3) eingesetzt wird, geneigt sind, insbesondere in einem Winkel von +45° und/oder -45°, wobei die Achse des oder der Zylinder in einer Ebene senkrecht zur Axialachse der Hülse liegt.

9. Vorrichtung nach einem der Ansprüche 1 bis 8, **dadurch gekennzeichnet, dass** die Aufnahme (3) zwei gegenüberliegende Vorsprünge (3a, 3b) aufweist, welche in die Profilnut (4a) eines in der Aufnahme (3) eingesetzten Anschlusselementes (4) eintaucht.

10. Vorrichtung nach einem der Ansprüche 1 bis 5, **dadurch gekennzeichnet, dass** im Falle eines hülsenförmigen Aufnahmeelementes (1) mit einem umlaufenden Profilring (4a') die nutförmigen Einkerbungen am Kontaktelement (1) ebene Flächen bilden.

11. Vorrichtung nach einem der vorhergehenden Ansprüche, **dadurch gekennzeichnet, dass** die Aufnahme (3) eine zwischen zwei Flanschabschnitten (1b 1c) gebildete Aussparung ist, wobei an den Flanschabschnitten (1b, 1c) ein sich über die Aussparung erstreckender Klemmbalken (6) lösbar befestigt ist, der zumindest mittelbar auf das Anschlusselement (4) drückt.

12. Vorrichtung nach Anspruch 11, **dadurch gekennzeichnet, dass** der Klemmbalken (6) an einer oder mehreren Kontaktstellen (6b), vorzugsweise an zwei Kontaktstellen, auf das Anschlusselement (4) drückt.

13. Vorrichtung nach Anspruch 11 oder 12, **dadurch gekennzeichnet, dass** der Klemmbalken (6) an wenigstens einem der Flanschabschnitte (1b, 1c) angeschraubt ist.

14. Vorrichtung nach einem der Ansprüche 11 bis 13, **dadurch gekennzeichnet, dass** der Klemmbalken (6) derart an dem Kupplungselement (1) vormontiert werden kann, dass er an einem Ende um eine Axialachse eines Flanschabschnittes (1c) bis in eine Anschlagsposition verschwenkt werden kann, wobei der Klemmbalken (6) zur Bewirkung der Klemmung in der Anschlagsposition fixiert werden kann und wobei in der Anschlagsposition vorzugsweise ein am entgegengesetzten Ende des Klemmbalkens (6) angeordneter Eingriffsabschnitt (6a) den anderen Flanschabschnitt (1b) kontaktiert.

15. Vorrichtung nach Anspruch 14, **dadurch gekennzeichnet, dass** der Klemmbalken (6) an einem Ende ein Loch mit geschlossenem Rand aufweist, in das ein erster. Schraubbolzen (2) zum Verschrauben mit dem einen Flanschabschnitt (1c) eingesetzt ist, wobei der Eingriffsabschnitt (6a) ein am entgegengesetzten Ende des Klemmbalkens (6) angeordnetes, zum Rand des Klemmbalkens (6) geöffnetes Loch (6a) ist, so dass durch eine Schwenkbewegung des Klemmbalkens (6) um den ersten Schraubbolzen (2) das geöffnete Loch (6a) auf einen zweiten Schraubbolzen (2) zum Verschrauben mit dem anderen Flanschabschnitt (1b) positioniert werden kann, wobei die Klemmung durch das Festziehen der beiden Schraubbolzen (2) bewirkt wird.

16. Vorrichtung nach Anspruch 14 oder 15, **dadurch gekennzeichnet, dass** der Klemmbalken (6) einen Vorsprung aufweist, mit dem der Klemmbalken (6) mit Hilfe der Finger eines Benutzers gedreht werden kann.

17. Vorrichtung nach einem der Ansprüche 11 bis 16, **dadurch gekennzeichnet, dass** der Klemmbalken (6) zur Bewirkung der Klemmung direkt auf das Anschlusselement (4) drückt.

18. Vorrichtung nach einem der Ansprüche 11 bis 16, **dadurch gekennzeichnet, dass** der Klemmbalken (6) zur Bewirkung der Klemmung auf eine oder mehrere Klemmbacken (3e) in der Aufnahme (3) drückt, wobei die Klemmmbacken (3e) das Anschlusselement (4) an einer oder mehreren. Kontaktstellen kontaktieren.

19. Vorrichtung nach einem der Ansprüche 11 bis 18, **dadurch gekennzeichnet, dass** der Klemmbalken (6) zur Bewirkung der Klemmung elastisch verformbar ist.

20. Vorrichtung nach einem der Ansprüche 11 bis 19, **dadurch gekennzeichnet, dass** der Klemmbalken (6) aus einem nicht leitenden Material, insbesondere aus Glasfaserkunststoff, besteht.

21. Vorrichtung nach einem der Ansprüche 11 bis 20, **dadurch gekennzeichnet, dass** der Klemmbalken (6) aus leitfähigem Material, insbesondere aus Metall, vorzugsweise aus Federbronze, besteht.

22. Vorrichtung nach einem der Ansprüche 11 bis 21, **dadurch gekennzeichnet, dass** der Klemmbalken (6) gegenüber den Flanschabschnitten (1b, 1c) und/oder gegenüber dem Anschlusselement (4) isoliert ist.

23. Vorrichtung nach einem der vorhergehenden Ansprüche, **dadurch gekennzeichnet, dass** das Anschlusselement (4) ein metallisches Drehteil, insbesondere aus verzinntem Messing und/oder Neusilber, ist.

24. Vorrichtung nach einem der vorhergehenden Ansprüche, **dadurch gekennzeichnet, dass** das Kupplungselement (1) integral mit dem Gehäuse in der Form eines Gussteils ausgebildet ist.

25. Vorrichtung nach einem der vorhergehenden Ansprüche, **dadurch gekennzeichnet, dass** der Außenleiter (5b) des Koaxialkabels (5) in dem Anschlusselement (4) eingelötet ist.

26. Gehäuse, insbesondere Gehäuse eines Phasenschiebers einer Antennenanordnung, umfassend eine Anschlussvorrichtung nach einem der vorhergehenden Ansprüche.

27. Gehäuse nach Anspruch 26, **dadurch gekennzeichnet, dass** ein Teil der Kontaktstellen der Anschlussvorrichtung benachbart zur Innenseite des Gehäuses und ein anderer Teil der Kontaktstellen der Anschlussvorrichtüng benachbart zur Außenseite des Gehäuses angeordnet sind.

## Claims

1. Apparatus for connection of a coaxial cable (5), in particular of an antenna coaxial cable, to a housing, with the apparatus having the following features:
- a sleeve-like connecting element (4) with an axial axis is provided,
- the connecting element (4) is or can be connected to the outer conductor (5b) of the coaxial cable (5), for which purpose the coaxial cable (5) enters the sleeve-like holding element (4) or can be inserted in it or connected to it, or the connecting element (4) forms a part of the outer conductor (5b) of the coaxial cable (5),
- a coupling element (1) is provided, which can be conductively connected to the housing or is formed integrally on the housing,
- the coupling element (1) has a holder (3) for insertion of the connecting element (4),
- the holder (3) for the coupling element (1) has an insertion opening into which the connecting element (4) can be inserted in a direction which runs essentially at right angles to the axial axis of the connecting element (4),
- the coupling element (1) has a clamping device (6) by means of which the connecting element (4) can be detachably firmly clamped in a clamping position in the holder (3), with the clamping device (6) on the insertion opening exerting pressure on the connecting element (4) in the clamping position, and thus pressing the connecting element (4) against the two or more contact points (3d, 3d'),
- the holding element (4) and the coupling element (1) are provided with projections and depressions which engage in one another,
a) with the holding element (4) being provided with a profiled groove (4a) which runs in the circumferential direction, thus forming annular webs, which are located offset in the axial direction and project radially, on the holding element (4), into which annular webs projections which are formed on the coupling element (1) enter the profiled groove (4a) between the annular webs, or
b) with the coupling element (1) being provided with a notch (3a, 3b), which is in the form of a groove and is provided in the circumferential direction, thus forming projections, which are located offset in the axial direction and project radially, on the coupling element (1), with the holding element (4) having a profiled ring or profiled projection which runs in the circumferential direction and enters the notch (3a, 3b), which is in the form of a groove, on the coupling element (1),
- the profiled groove (4a) and the notch (3a, 3b), which is in the form of a groove, have flanks (4b; 3d') which are offset in the axial direction of the connecting element (4) and are designed such that they diverge in opposite senses, and
- the contact points (3d; 3d') are formed and/or arranged on the contact element (1) such that they make contact with the sleeve-like holding device (4) on the diverging flanks (4b) of the profiled groove (4a) and of the profiled ring (4a'), partially in the axial direction and partially offset in the circumferential direction of the connecting sleeve (4).

2. Apparatus according to Claim 1, **characterized in that** a number of contact points (3d, 3d'), in particular four, are provided, with at least one pair of contact points (3d, 3d') being provided offset with respect to one another in the axial direction and in the same position in the circumferential direction with respect to the sleeve-like connecting device (4).

3. Apparatus according to Claim 2, **characterized in that** some of the contact points (3d, 3d') are located on the inside of the housing, and the other contact points (3d, 3d') are located on the outside of the housing.

4. Apparatus according to one of the preceding claims, **characterized in that** the contact points (3d, 3d') are arranged symmetrically about an axis of symmetry which corresponds to the direction in which the connecting element (4) is inserted into the holder (3).

5. Apparatus according to Claim 4, **characterized in that**, seen in the axial direction of the connecting element (4), the contact points (3d, 3d') are offset with respect to one another through an angle of between 90° and 120°.

6. Apparatus according to one of the preceding claims, **characterized in that** in the case of a sleeve-like holding element (4) with a circumferential profiled groove (4a) the contact points (3d) represent a structure element of a cylindrical surface (3d) on the contact element (1).

7. Apparatus according to Claim 6, **characterized in that** the conical flanks (4b) of the profiled groove (4a) are inclined at an angle of +30° and/or -30° to the axial axis of the sleeve (4).

8. Apparatus according to Claim 6 or 7, **characterized in that** the cylindrical surfaces (3d) represent flat sections on one or more cylinders which are inclined with respect to the axis in whose direction the connecting element (4) is inserted into the insertion opening in the holder (3) in particular at an angle of +45° and/or -45°, with the axis of the cylinder or cylinders lying on a plane at right angles to the axial axis of the sleeve.

9. Apparatus according to one of Claims 1 to 8, **characterized in that** the holder (3) has two opposite projections (3a, 3b), which enter the profiled groove (4a) in a connecting element (4) which has been inserted into the holder (3).

10. Apparatus according to one of Claims 1 to 5, **characterized in that** in the case of a sleeve-like holding element (1) with a circumferential profiled ring (4a'), the groove-like notches form planar surfaces on the contact element (1).

11. Apparatus according to one of the preceding claims, **characterized in that** the holder (3) is a cutout formed between two flange sections (1b, 1c), with a clamping bar (6) which extends over the cutout being detachably attached to the flange sections (1b, 1c) and pressing at least indirectly on the connecting element (4).

12. Apparatus according to Claim 11, **characterized in that** the clamping bar (6) presses on the connecting element (4) at one or more contact points (6b), preferably at two contact points.

13. Apparatus according to Claim 11 or 12, **characterized in that** the clamping bar (6) is screwed to at least one of the flange sections (1b, 1c).

14. Apparatus according to one of Claims 11 to 13, **characterized in that** the clamping bar (6) can be mounted on the coupling element (1) in advance such that it can be pivoted at one end about an axial axis of a flange section (1c) into a stop position, in which case the clamping bar (6) can be fixed in the stop position in order to produce the clamping effect, and with an engagement section (6a), which is arranged at the opposite end of the clamping bar (6), preferably making contact with the other flange section (1b) in the stop position.

15. Apparatus according to Claim 14, **characterized in that** the clamping bar (6) has a hole with a closed edge at one end, into which hole a first threaded bolt (2) is inserted for screwing to one flange section (1c), with the engagement section (6a) being a hole (6a) which is arranged at the opposite end of the clamping bar (6) and is open to the edge of the clamping bar (6), such that a pivoting movement of the clamping bar (6) about the first threaded bolt (2) allows the opened hole (6a) to be positioned on a second threaded bolt (2) for screwing to the other flange section (1b), with the clamping effect being produced by tightening the two threaded bolts (2).

16. Apparatus according to Claim 14 or 15, **characterized in that** the clamping bar (6) has a projection by means of which the clamping bar (6) can be rotated by a user's finger.

17. Apparatus according to one of Claims 11 to 16, **characterized in that** the clamping bar (6) presses directly on the connecting element (4) in order to produce the clamping effect.

18. Apparatus according to one of Claims 11 to 16, **characterized in that** the clamping bar (6) presses on one or more clamping jaws (3e) in the holder (3) in order to produce the clamping effect, with the clamping jaws (3e) making contact with the connecting element (4) at one or more contact points.

19. Apparatus according to one of Claims 11 to 18, **characterized in that** the clamping bar (6) can be elastically deformed in order to produce the clamping effect.

20. Apparatus according to one of Claims 11 to 19, **characterized in that** the clamping bar (6) is composed of a non-conductive material, in particular of glass fiber reinforced plastic.

21. Apparatus according to one of Claims 11 to 20, **characterized in that** the clamping bar (6) is composed of a conductive material, in particular of metal and preferably of spring bronze.

22. Apparatus according to one of Claims 11 to 21, **characterized in that** the clamping bar (6) is isolated from the flange sections (1b, 1c) and/or from the connecting element (4).

23. Apparatus according to one of the preceding claims, **characterized in that** the connecting element (4) is a metallic turned part, composed in particular of tinned brass and/or nickel silver.

24. Apparatus according to one of the preceding claims, **characterized in that** the coupling element (1) is formed integrally with the housing, in the form of a casting.

25. Apparatus according to one of the preceding claims, **characterized in that** the outer conductor (5b) of the coaxial cable (5) is soldered in the connecting element (4).

26. Housing, in particular housing for a phase shifter for an antenna arrangement, comprising a connecting apparatus according to one of the preceding claims.

27. Housing according to Claim 26, **characterized in that** some of the contact points of the connecting apparatus are arranged adjacent to the inside of the housing, and the other contact points of the connecting apparatus are arranged adjacent to the outside of the housing.

## Revendications

1. Dispositif de connexion d'un câble coaxial (5), en particulier d'un câble coaxial d'antenne, à un boîtier, le dispositif présentant les éléments suivants :
- il est prévu un élément de connexion en forme de douille (4) avec un axe axial,
- l'élément de connexion (4) est relié ou susceptible d'être relié au conducteur extérieur (5b) du câble coaxial (5), ce à quoi le câble coaxial (5) plonge dans l'élément de logement (4) en forme de douille ou est susceptible d'être mis en place dans celui-ci ou d'être relié à celui-ci, ou bien l'élément de connexion (4) forme une partie du conducteur extérieur (5b) du câble coaxial (5),
- il est prévu un élément de couplage (1) susceptible d'être relié avec conduction au boîtier ou réalisé intégralement sur le boîtier,
- l'élément de couplage (1) présente un logement (3) pour mettre en place l'élément de connexion (4),
- le logement (3) de l'élément de couplage (1) présente une ouverture d'introduction dans laquelle l'élément de connexion (4) peut être mis en place dans une direction qui s'étend sensiblement perpendiculairement à l'axe axial de l'élément de connexion (4),
- l'élément de couplage (1) comprend un organe de serrage (6) par lequel l'élément de connexion (4) peut être serré de façon détachable dans le logement (3) dans une position de serrage, position de serrage dans laquelle l'organe de serrage (6) exerce une pression sur l'élément de connexion (4) au niveau de l'ouverture d'introduction et pousse ainsi l'élément de connexion (4) contre plusieurs emplacements de contact (3d, 3d'),
- l'élément de logement (4) et l'élément de couplage (1) sont pourvus de saillies et de renfoncements s'engageant les uns dans les autres,
a) l'élément de logement (4) étant pourvu d'une gorge profilée (4a) s'étendant en direction périphérique, ce qui a pour effet de former sur l'élément de logement (4) des barrettes annulaires dépassant radialement et décalées en direction axiale, des saillies réalisées sur l'élément de couplage (1) plongeant dans la gorge profilée (4a) entre les barrettes annulaires, ou
b) l'élément de couplage (1) étant munie d'une entaille (3a, 3b) en forme de gorge s'étendant en direction périphérique, ce qui a pour effet de former sur l'élément de couplage (1) des saillies dépassant radialement et décalées en direction axiale, l'élément de logement (4) comprenant une bague profilée ou une saillie profilée s'étendant en direction périphérique qui plonge dans l'entaille (3a, 3b) en forme de gorge dans l'élément de couplage (1),
- la gorge profilée (4a) ou l'entaille (3a, 3b) en forme de gorge présente des flancs (4b ; 3d') décalés en direction axiale de l'élément de connexion (4), qui sont réalisés de manière à diverger en sens opposés, et
- les emplacements de contact (3d ; 3d') sont réalisés et/ou agencés de telle sorte sur l'élément de contact (1) qu'ils mettent en contact l'élément de logement (4) en forme de douille au niveau des flancs divergents (4b) de la gorge profilée (4a) ou de la bague profilée (4a') en décalage partiellement en direction axiale et partiellement en direction périphérique de la douille de connexion (4).

2. Dispositif selon la revendication 1, **caractérisé en ce qu'**il est prévu plusieurs, en particulier quatre emplacements de contact (3d, 3d'), au moins une paire d'emplacements de contact (3d, 3d') étant prévue en décalage mutuel en direction axiale et dans la même position en direction périphérique par rapport à l'élément de connexion (4) en forme de douille.

3. Dispositif selon la revendication 2, **caractérisé en ce qu'**une partie des emplacements de contact (3d, 3d') se trouve sur le côté intérieur du boîtier et l'autre partie des emplacements de contact (3d, 3d') se trouve sur le côté extérieur du boîtier.

4. Dispositif selon l'une des revendications précédentes, **caractérisé en ce que** les emplacements de contact (3d, 3d') sont agencés symétriquement autour d'un axe de symétrie qui correspond à la direction dans laquelle l'élément de connexion (4) est mis en place dans le logement (3).

5. Dispositif selon la revendication 4, **caractérisé en ce que** les emplacements de contact (3d, 3d'), vus en direction axiale de l'élément de connexion (4), sont décalés d'un angle de 90° à 120° l'un par rapport à l'autre.

6. Dispositif selon l'une des revendications 1 à 5, **caractérisé en ce que** dans le cas d'un élément de logement (4) en forme de douille pourvu d'une gorge profilée périphérique (4a), les emplacements de contact (3d) sur l'élément de contact (1) représentent une structure partielle d'une surface cylindrique (3d).

7. Dispositif selon la revendication 6, **caractérisé en ce que** les flancs coniques (4b) de la gorge profilée (4a) sont inclinés sous un angle de +30° et/ou de -30° par rapport à l'axe axial de la douille (4).

8. Dispositif selon la revendication 6 ou 7, **caractérisé en ce que** les surfaces cylindriques (3d) représentent des tronçons de surface d'un ou de plusieurs cylindres qui sont inclinés par rapport à l'axe dans la direction duquel l'élément de connexion (4) est mis en place dans l'ouverture d'introduction du logement (3), en particulier sous un angle de +45° et/ou de -45°, l'axe du ou des cylindres étant situé dans un plan perpendiculaire à l'axe axial de la douille.

9. Dispositif selon l'une des revendications 1 à 8, **caractérisé en ce que** le logement (3) comprend deux saillies opposées (3a, 3b) qui plongent dans la gorge profilée (4a) d'un élément de connexion (4) mis en place dans le logement (3).

10. Dispositif selon l'une des revendications 1 à 5, **caractérisé en ce que** dans le cas d'un élément de logement (1) en forme de douille pourvu d'une bague profilée périphérique (4a'), les entailles en forme de gorge sur l'élément de contact (1) forment des surfaces planes.

11. Dispositif selon l'une des revendications précédentes, **caractérisé en ce que** le logement (3) est une échancrure formée entre deux tronçons de bride (1b, 1c), dans lequel une barre de serrage (6) qui s'étend pardessus l'échancrure est fixée de façon détachable sur les tronçons de bride (1b, 1c), barre qui pousse au moins indirectement sur l'élément de connexion (4).

12. Dispositif selon la revendication 11, **caractérisé en ce que** la barre de serrage (6) pousse sur l'élément de connexion (4) à un ou à plusieurs emplacements de contact (6b), de préférence à deux emplacements de contact.

13. Dispositif selon la revendication 11 ou 12, **caractérisé en ce que** la barre de serrage (6) est vissée sur l'un au moins des tronçons de bride (1b, 1c).

14. Dispositif selon l'une des revendications 11 à 13, **caractérisé en ce que** la barre de serrage (6) est susceptible d'être préassemblée sur l'élément de couplage (1) de manière à pouvoir pivoter à une extrémité autour d'un axe axial du tronçon de bride (1c) jusque dans une position de butée, la barre de serrage (6) pouvant être fixée dans la position de butée pour provoquer le serrage, position de butée dans laquelle de préférence un tronçon d'engagement (6a) agencé à l'extrémité opposée de la barre de serrage (6) vient en contact avec l'autre tronçon de bride (1b).

15. Dispositif selon la revendication 14, **caractérisé en ce que** la barre de serrage (6) présente à une extrémité un trou avec un bord fermé dans lequel est mis en place un premier boulon (2) pour le vissage avec l'un des tronçons de bride (1c), le tronçon d'engagement (6a) étant un trou (6a) ménagé à l'extrémité opposée de la barre de serrage (6) et ouvert vers le bord de la barre de serrage (6), de sorte que suite à un mouvement de pivotement de la barre de serrage (6) autour du premier boulon (2), le trou ouvert (6a) peut être positionné sur un second boulon (2) pour le vissage avec l'autre tronçon de bride (1b), le serrage étant provoqué en serrant les deux boulons (2).

16. Dispositif selon la revendication 14 ou 15, **caractérisé en ce que** la barre de serrage (6) présente une saillie par laquelle la barre de serrage (6) peut être tournée à l'aide des doigts d'un utilisateur.

17. Dispositif selon l'une des revendications 11 à 16, **caractérisé en ce que** la barre de serrage (6) pousse directement sur l'élément de connexion (4) pour provoquer le serrage.

18. Dispositif selon l'une des revendications 11 à 16, **caractérisé en ce que** pour provoquer le serrage, la barre de serrage (6) pousse sur une ou plusieurs mâchoires de serrage (3e) dans le logement (3), les mâchoires de serrage (3e) mettant en contact l'élément de connexion (4) à un ou à plusieurs emplacements de contact.

19. Dispositif selon l'une des revendications 11 à 18, **caractérisé en ce que** pour provoquer le serrage, la barre de serrage (6) est élastiquement déformable.

20. Dispositif selon l'une des revendications 11 à 19, **caractérisé en ce que** la barre de serrage (6) est constituée d'un matériau non conducteur, en particulier en matière plastique à fibres de verre.

21. Dispositif selon l'une des revendications 11 à 20, **caractérisé en ce que** la barre de serrage (6) est constituée d'un matériau conducteur, en particulier de métal, de préférence de bronze à ressort.

22. Dispositif selon l'une des revendications 11 à 21, **caractérisé en ce que** la barre de serrage (6) est isolée par rapport aux tronçons de bride (1b, 1c) et/ou par rapport à l'élément de connexion (4).

23. Dispositif selon l'une des revendications précédentes, **caractérisé en ce que** l'élément de connexion (4) est une pièce métallique réalisée au tour, en particulier en laiton étamé et/ou en maillechort.

24. Dispositif selon l'une des revendications précédentes, **caractérisé en ce que** l'élément de couplage (1) est réalisé intégralement avec le boîtier sous la forme d'une pièce de fonderie.

25. Dispositif selon l'une des revendications précédentes, **caractérisé en ce que** le conducteur extérieur (5b) du câble coaxial (5) est brasé dans l'élément de connexion (4).

26. Boîtier, en particulier boîtier d'un déphaseur d'un agencement d'antenne, comportant un dispositif de connexion selon l'une des revendications précédentes.

27. Boîtier selon la revendication 26, **caractérisé en ce qu'**une partie des emplacements de contact du dispositif de connexion sont agencées au voisinage du côté intérieur du boîtier et une autre partie des emplacements de contact du dispositif de connexion sont agencées au voisinage du côté extérieur du boîtier.
